# EUROPEAN PATENT SPECIFICATION

(11) **EP 2 641 300 B1**
(45) Date of publication and mention of the grant of the patent: **27.01.2016**
(21) Application number: 11749903.8
(22) Date of filing: 17.05.2011
(51) Int. Cl.: H01R 13/52, H01R 13/631, H01R 13/641, H01R 13/66, B60L 11/18

(54) **CONNECTOR DEVICE AND CONNECTOR ASSEMBLY FOR VEHICLE ELECTRICAL POWER SUPPLY**
VERBINDUNGSVORRICHTUNG UND VERBINDERANORDNUNG ZUR STROMVERSORGUNG EINES FAHRZEUGS
DISPOSITIF DE CONNECTEUR ET ENSEMBLE DE CONNECTEUR POUR ALIMENTATION ELECTRIQUE D'UN VÉHICULE

(30) Priority: 29.10.2010 WO PCT/IB2010/003231
(43) Date of publication of application: 25.09.2013
(73) Proprietor: Delphi International Operations Luxembourg S.à r.l., 4940 Bascharage (LU)
(72) Inventor: FABRE, Jean, F-28000 Chartres (FR); SCHMITT, Gilles, F-28210 Senantes (FR); MENEZ, Frédéric, F-78125 Hermeray (FR)
(74) Representative: Delphi France SAS
(86) International application number: PCT/IB2011/001456
(87) International publication number: WO 2012/056274

(56) References cited:
- EP-A2- 0 920 084
- WO-A1-2007/017560
- US-A- 5 336 101
- US-A- 6 000 974

## Description

### FIELD OF THE INVENTION

The present invention relates to a connector housing provided with a sealing system for a mating operation with a housing of a complementary connector part.

As the vehicle charging electrical connectors request a humidity sealing system, the invention relates in particular to connector housings for vehicle electrical power supply.

Sealing systems for a connector assembly comprise two types of seals. One type is a seal mat, or a seal ring which is compressed along the mating axis between two corresponding sealing surfaces of corresponding connector parts. The sealing surfaces extend radially and the final relative axial position of the two connector parts has to be tightly controlled.

Another type of sealing system is adapted to connector parts having cylindrical sealing surfaces sliding axially during the mating operation, one cylindrical surface surrounding the other in the mating position. A seal of this type has an annular shape and is radially compressed so as to radially seal the two cylindrical surfaces. The present invention relates to this later type of radial sealing system. See for example US-5,336,101 which discloses a connector having a rubber ring.

### STATE OF THE ART

The above radial sealing systems have the advantage that the sealing efficiency is guaranteed by the dimension of the two sealing cylinders and the radial compressibility of the annular seal. It is independent from the final relative axial position of the corresponding connector parts.

However, if during the mating operation, the two corresponding cylindrical sealing surfaces do not slide coaxially, one sealing surface may damage the annular seal. Additionally, if the annular seal extends axially and/or is rather soft in the axial direction, the relative axial movement of the two sealing cylinders may provoke a huge axial deformation of the annular seal - for example like a sock folding - during the mating operation. That huge axial deformation may block the relative axial mating movement of the two connector parts before the final axial mating position.

The invention provides a connector housing, in particular for vehicle electrical power supply, an electrical connector, a connector assembly, an electrical connector assembly and a manufacturing method for a connector housing which remedy to one of the above drawbacks.

A goal of the invention is to provide a safer sealing system preventing the seal from being damaged or the connector mating operation from being blocked.

### SUMMARY OF THE INVENTION

According to the invention, a connector housing for vehicle electrical power supply according to claim 1 is disclosed and comprises a casing including a mating axis. The casing is structured to mate into a complementary casing following the mating axis towards a mating direction. The casing has a seal fixation cylinder with a diameter.

The housing comprises an annular seal extending radially outside the casing with respect to the mating axis. The seal is fixed on said seal fixation cylinder. The radial annular seal includes a sealing diameter adapted to radially seal the complementary casing.

The housing comprises a frontal shield which extends axially in front of the annular seal towards the mating direction. This shield includes a radially extreme surface extending between the diameter of the seal fixation cylinder and the sealing diameter.

Due to the frontal shield, the complementary casing is guided during the axial mating operation. As the complementary casing is radially guided outside the radially extreme surface of the frontal shield, the complementary casing cannot bump into the base of the annular seal at the level of the seal fixation diameter. This reduces the risk of exerting only an axial force on the annular seal, leading to a sock folding or a damage of the annular seal.

Additionally, as the radially extreme surface extends inside a sealing diameter, the complementary casing is not stopped by the frontal shield and can still cooperate with the annular seal to radially compress it down to the sealing diameter during the mating operation and to provide a radial seal between the casing and the complementary casing.

The sealing diameter of a particular connector housing is intended to be the diameter for which the annular seal provides the requested radial sealing. It can be determined taking into account the mechanical deformation characteristics of the annular seal, a shape of the annular seal and the level of sealing requested for the connector housing depending on the operative conditions. In any case, the sealing diameter of a particular connector housing is smaller than the extreme radial diameter of the annular seal when fixed on the seal fixation diameter.

In some other embodiments, one might also use one or more of the features as defined in dependant claims.

### BRIEF DESCRIPTION OF THE DRAWINGS

Other characteristics and advantages of the invention will readily appear from the following description of some of its embodiments, provided as a non-limitative example, and of the accompanying drawings. On the drawings:
- Figure 1 is a perspective view of a connector part showing an embodiment of the connector housing of the invention,
- Figure 2 is a perspective view of a global seal of the connector housing of figure 1,
- Figure 3 is a perspective view of a part of figure 1 showing the main body of the connector housing,
- Figure 4 is a perspective view, cut following the plane IV-IV of figure 1 of a complementary housing receiving the connector housing of figure 1,
- Figure 5 is a longitudinal section following the plane IV-IV of figure 1 of the connector assembly according to Figures 1 to 4, and,
- Figure 6 is a detailed view of the frontal shield of Figure 1,
- Figure 7 is a partial view in perspective of another embodiment of connector housing,
- Figure 8 is a longitudinal section of a mated connector assembly following the plan VIII-VIII of Figure 7,
- Figure 9 illustrates the mated sequence of the embodiment of Figures 7-8.

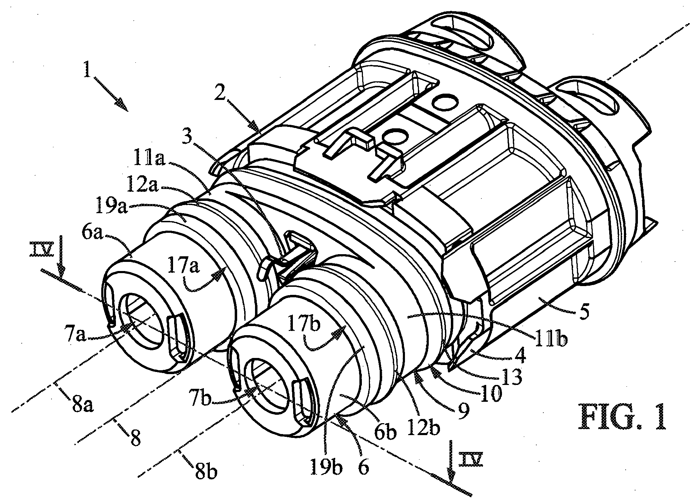

As illustrated in Figure 1, a connector 1 comprises a connector housing 2 and some internal electrical devices like a mating sensor 3. The connector housing 2 comprises a main body 4 including a back portion 5 having a global oval shape and a front portion 6 consisting in two cylindrical casings 6a, 6b. Each casing 6a, 6b has an internal cavity 7a, 7b receiving an electrical power contact not shown.

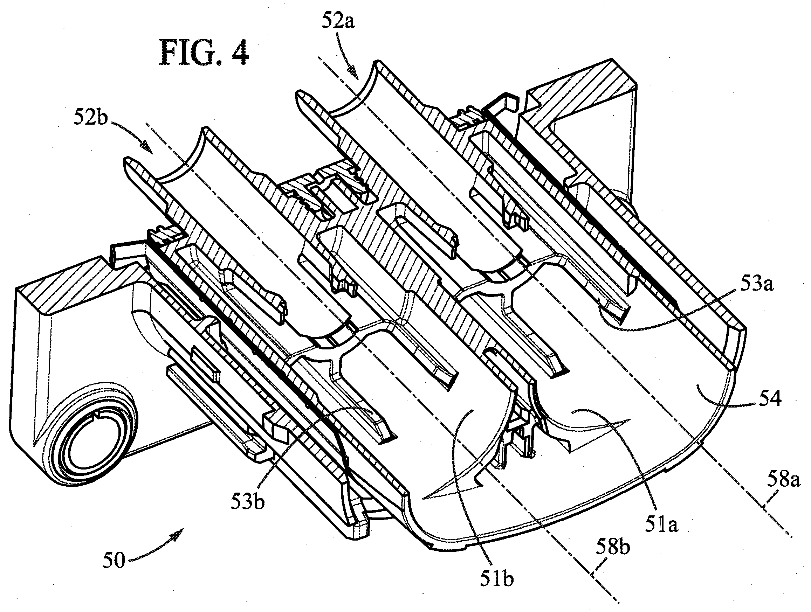

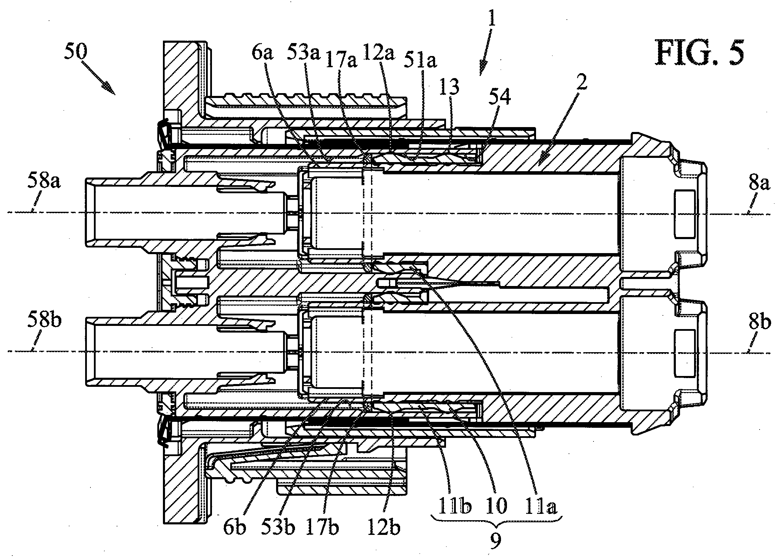

The connector 1 mates with a complementary connector 50 (see figures 4,5) including complementary casings 51a, 51b which mate with the casing 6a, 6b following a mating axis 8a, 8b. Both mating axis 8a, 8b are parallel and oriented in the same mating direction than a global mating axis 8 of the connector 1 towards the complementary connector 50.

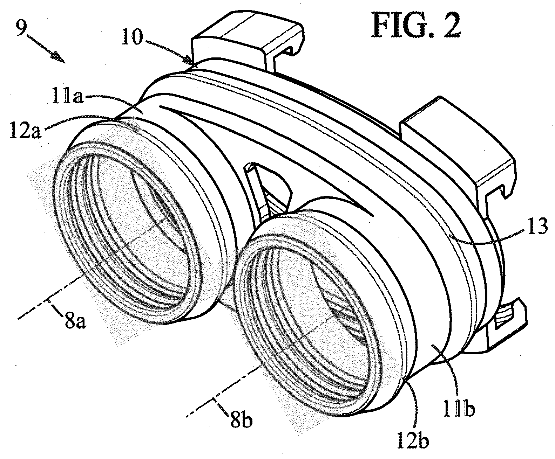

As illustrated on Figure 1 and 2, the connector housing 2 further comprises a global seal 9 which is moulded with an elastomeric material and surrounds the main body 4 in an area which straddles the back and the front portions 5, 6 of the main body 4. The global seal 9 includes a back portion 10 having a global oval shape and includes two annular seals 11a, 11b surrounding the casing 6a, 6b. Each annular seal 11a, 11b comprises a circular external sealing rib 12a, 12b, extending in a plane perpendicular to the corresponding mating axis 8a, 8b. The cross section of the sealing rib 12a, 12b, following a radial plane is substantially triangular, the top of the triangle corresponding to the radially extreme periphery of the annular seal 11a, 11b.

The back portion 10 of the global seal 9 comprises a peripheral sealing line 13 having an oval shape in a plane perpendicular to the mating axis 8. The peripheral sealing line 13 has a substantially triangular cross section with a triangle top oriented towards the outside.

The connector housing 2 further comprises two frontal shields 17a, 17b,fixed on the casing 6a, 6b, located axially just in front of the annular seal 11a, 11b, towards the complementary connector 50. Each frontal shield 17a, 17b is a metallic ring, press fitted on the corresponding casing 6a, 6b after the global seal 9 being introduced around the main body 4.

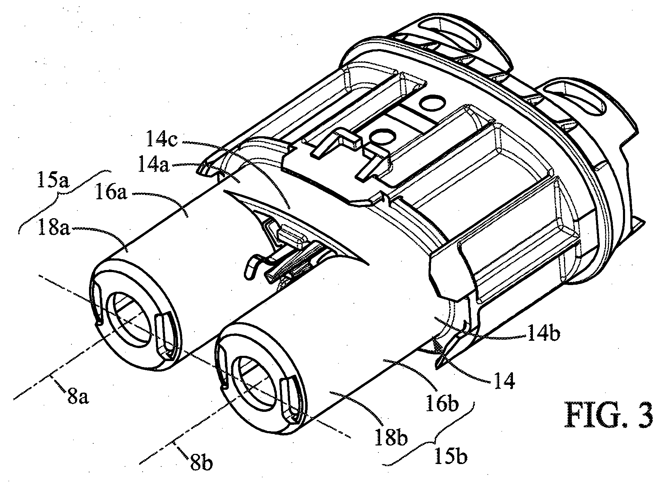

As illustrated in Figure 3, the main body 4 comprises a peripheral back wall 14 which is axially adjacent to outer cylinders 15a, 15b of the casing 6a, 6b. The peripheral back wall 14 comprises two lateral surfaces 14a, 14b, which are in the axial continuation of the outer cylinder 15a, 15b of the casing 6a, 6b, and comprises two bridges 14c, which connect the two lateral surfaces 14a, 14b to form a global oval shape in a plane perpendicular to the global mating axis 8.

In a variant of the connector housing having more than two casings 6a, 6b, the peripheral back walls have a cross section perpendicularly to the global mating axis which forms a closed convex loop. Therefore, when the back portion 10 of the global seal 9 is radially stretched to cover and to press the back wall 14, the elastic compression of the seal 9 around the back wall 14 provides natural humidity sealing.

Each outer cylinder 15a, 15b of the casing 6a, 6b includes a seal fixation diameter 16a, 16b on which the corresponding annular seal 11a, 11b is fixed. Each frontal shield 17a, 17b, is press fitted about a front diameter 18a, 18b having the same diameter than the seal fixation diameter 16a, 16b.

In a variant, each casing 6a, 6b may include several diameters. The front diameter 18a, 18b may be smaller than the seal fixation diameter 16a, 16b. The lateral surface 14a, 14b may extend radially further the seal fixation diameter 16a, 16b.

As illustrated in Figures 4 and 5, the complementary connector 50 comprises two complementary casings 51a, 51b corresponding to the casings 6a, 6b of the connector 1. Each complementary casing 51a, 51b is cylindrical with a mating axis 58a, 58b. The complementary casing 51a, 51b covers the front shield 17a, 17b and the annular seal 11a, 11b of the connector housing 2 when the connector 1 is in a mated position with the complementary connector 50, illustrated in figure 5.

The complementary connector 50 comprises internal cavities 52a, 52b on which complementary electrical power connectors (not shown) are fixed. The complementary connector 50 further comprises guiding axial ribs 53a, 53b which cooperate with frontal portions of the front diameters 18a, 18b for centring the casing 6a, 6b about the mating axis 58a, 58b. The complementary connector 50 further comprises a front oval casing 54 adapted to cover the oval back wall 14 of the connector housing 2.

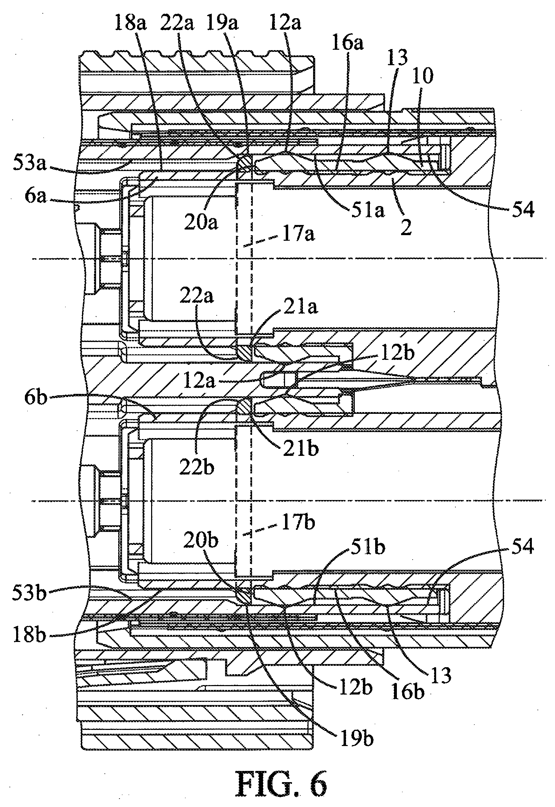

As illustrated in figure 6, the mating sequence, comprises the following steps. The complementary casing 51a, 51b receives first the front diameter 18a, 18b of the casing 6a, 6b. Then, the frontal shield 17a, 17b enters into the corresponding complementary casing 51a, 51b, so that a radially extreme surface 19a, 19b of each frontal shield 17a, 17b slides into the cylindrical complementary casing 51a, 51b. Then the annular seal 11a, 11b enters into the complementary casing 51a, 51b.

As the annular seal 11a, 11b are mounted about the seal fixation diameter 16a, 16b of the casing 6a, 6b, the diameter of the sealing rib 12a, 12b is larger than the inner diameter of the complementary casing 51a, 51b. The frontal shield 17a, 17b prevents the complementary casing during the mating sequence from touching a front end 20a, 20b of the annular seal 11a, 11b. So, the complementary casing 51a, 51b first touches the annular seal 11a, 11b on the slope of the triangular cross section of the sealing rib 12a, 12b.

Therefore, the annular seal 11a, 11b is radially compressed when entering into the complementary casing 51a, 51b. The global seal material can be 50 shores so that the compression force is high enough to provide the requested humidity seal between the casing 6a, 6b and the corresponding casing 51a, 51b. Thanks to the first contact on the slope, the axial force exerted on the annular seal 11a, 11b, is limited enough to prevent the annular seal 11a, 11b from being axially folded like a sock during the insertion.

Then, the connector 1 can reach the illustrated mated position. The front oval casing 54 of the connector 50 reaches and compresses the peripheral sealing line 13 of the global seal 9, so as to provide humidity seal between the front oval casing 54 and the back wall 14 of the connector housing 2.

The frontal shield 17a, 17b is a metallic ring with at least an inner chamfer 21a, 21b and an outer chamfer 22a, 22b on the opposite side. The inner chamfer 21a, 21b makes the press fit on the casing 6a, 6b easier. The outer chamfer 22a, 22b helps the introduction on the front shield 17a, 17b into the complementary casing 51a, 51b.

The axial length of the front diameter 18a, 18b in front of the frontal shield 17a, 17b is larger than the axial course of said frontal shield 17a, 17b inside the complementary casing 51a, 51b. So, the casing 6a, 6b is pre-centred by the cooperation of the front diameter 18a, 18b and the guiding rib 53a, 53b, before the frontal shield 17a, 17b enters into the complementary casing 51a, 51b. The radial play between the radially extreme surface 19a, 19b of the frontal shield 17a, 17b and the inner diameter of the complementary casing 51a, 51b is small enough to provide an efficient second centring. The pre-centre being associated with the second centring at a certain axial distance prevents tilt between respectively the mating axis 8a, 8b of the connector 1 and the mating axis 58a, 58b of the connector 50.

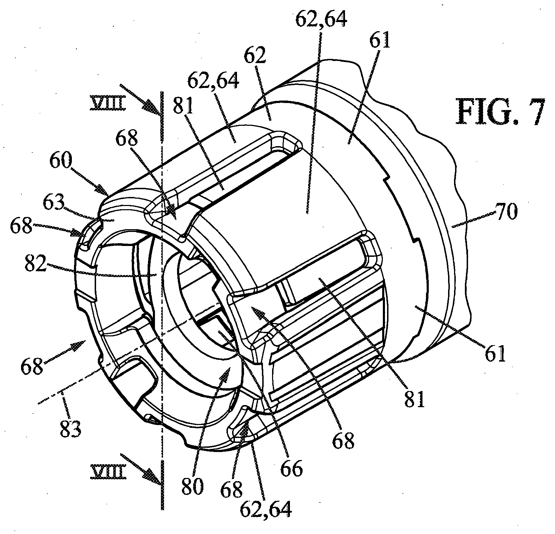

As illustrated in Figure 7, the embodiment of connector housing comprises a casing 80 having a mating axis 83 and a frontal portion 81 terminated by a casing axial extremity 82. The connector housing further comprises a frontal shield 60 surrounding the frontal portion 81 of the casing 80 and moulded in a synthetic material.

The frontal shield 60 comprises an outside surface 62 which extends along a cylinder of the casing 80, which is coaxial to the mating axis 83. The outside surface 62 is a radially extreme surface 62 which extends axially further the casing 80 towards the mating direction. A front extremity 63 of the frontal shield 60 extends axially further the casing axial extremity 82.

The frontal shield 60 comprises (six) slots 68 distributed about the mating axis 83. Any number of slots superior or equal to two, may be used. Each slot 68 is parallel to the mating axis 83 and extends axially up to the front extremity 63 of the frontal shield 60. Each slot 68 extends radially at least from the outside surface 62 to the frontal portion 81 of the casing 80. In other words, the slots 68 are radially open to the outside and to an inside cylinder of the frontal shield 60 designed for receiving the frontal portion 81 of the casing 80.

The frontal shield 60 comprises elements 64 which extend between the slots 68. The radially extreme surface 62 extends axially along these elements 64.

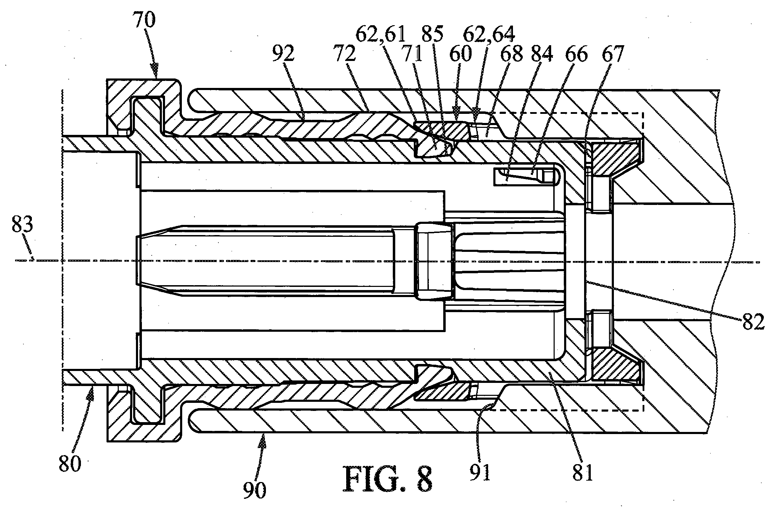

As illustrated in figure 7 or 8, a complementary casing 90 comprises guiding axial ribs 91 which slide along the slots 68 during the mating sequence. Each guiding axial rib 91 radially ends on an inner diameter adjusted to an outside diameter of the frontal portion 81 of the casing 80. Therefore, the complementary connector 90 is directly centred with regards to the casing 80 without intermediate piece parts.

The frontal shield 60 further comprises a locking spring 66 and an axial stop 67 corresponding to the casing axial extremity 82. The locking spring 66 cooperates with a radial opening 84 of the casing 80 in order to fasten the frontal shield 60 on the casing 80.

The connector housing further comprises an annular seal 70 comprising at least one anchoring portion 71 located at the front of the annular seal 70 towards the mating direction. The casing 80 comprises at least a retention cavity 85 receiving the anchoring portion 71. The frontal shield 60 comprises at least one protrusion 61 extending at the back of the frontal shield 60 with regards to the mating direction. The back protrusions 61 extend at the same axial position as the anchoring portions 71 and surround the anchoring portions 71 when they are fitted in the retention cavity 85. Therefore, the back protrusions 61 lock the annular seal 70 and the casing 80 together.

When mated, a receiving cavity 92 of a complementary casing 90 slides along the annular seal 70. The diameter of the receiving cavity 92 corresponds to the sealing diameter 72 of the annular seal 70, to provide humidity seal between both casings 80, 90.

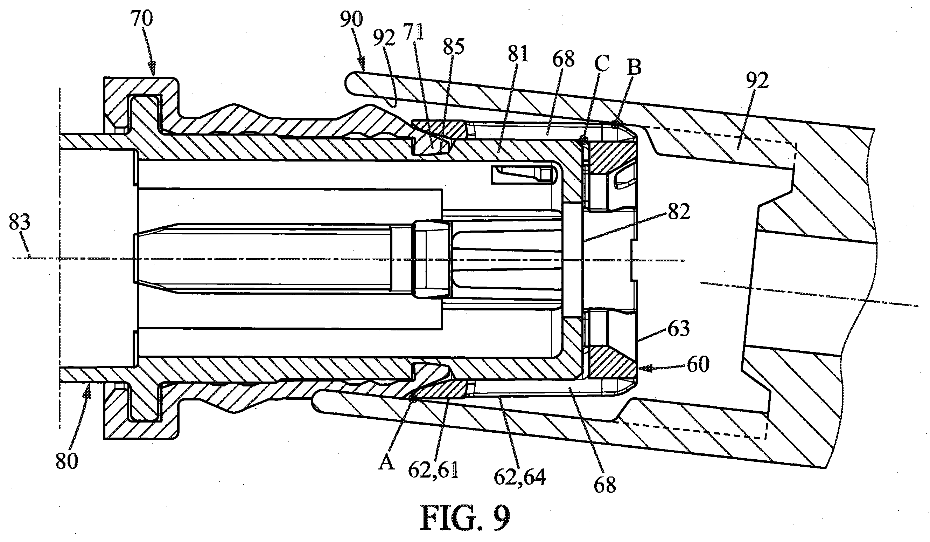

As illustrated in Figure 9, the frontal shield 60 provides an anti-pinching effect. The elements 64 of the frontal shields 60 are pre-alignment elements 64 which provide alignment of the connector housing with regards to the complementary casing 90, when entering into the receiving cavity 92 of the complementary casing 90.

During the mating sequence, the complementary casing 90 slides on one side along the point A at the extremity of the back protrusion 61 and on the other side along the point B at the extremity of the pre-alignment element 64.

As the pre-alignment elements 64, and their outside surface 62 extend axially further the casing axial extremity 82, and extend radially further the frontal portion 80 (see point C), the maximum angle between the casing 80 and the complementary casing 90 is reduced.

There is still some mechanical interference between the annular seal 70 and the complementary casing 90 during the mating surface. However, the pre-alignment provided by the frontal shield 60 is such that the remaining mechanical interference does not destroy the annular seal 70 during the mating sequence.

The combination, in the frontal shield 60 of the pre-alignment element 64 extending axially and/or radially further the casing 80, together with the slots 68 designed for providing access of the complementary casing 90 directly to the casing 80, provides an anti-pinching effect of the annular seal 70 without any degradation of the centring between the casing 80 and the complementary casing 90.

In an embodiment of the connector housing not part of the invention, the radially extreme surface (19a, 19b, 62) is radially tangent to a diameter comprised between 60 % and 98 % of the sealing diameter, preferably between 80 % and 96 % of the sealing diameter, in particular between 90 % and 95 % of the sealing diameter.

In an embodiment of the connector housing not part of the invention, the frontal shield (17a, 17b) and the corresponding casing (16a, 16b) are moulded in one-piece.

## Claims

1. Connector housing (2) for vehicle electrical power supply, comprising:
- a casing (6a, 6b, 80) including a mating axis (8a, 8b, 83) and being structured to mate into a complementary casing (51a, 51b, 90) following the mating axis towards a mating direction, the casing (6a, 6b, 80)) having a seal fixation cylinder with a diameter (16a, 16b), and
- an annular seal (11a, 11b, 70) extending radially outside the casing (6a, 6b, 80) with respect to the mating axis (8a, 8b) and being fixed on said seal fixation cylinder, the annular seal (11a, 11b, 70) including a sealing diameter adapted to radially seal the complementary casing (51a, 51b, 90) ;
wherein it comprises a frontal shield (17a, 17b, 60) which extends axially in front of the annular seal (11a, 11b, 70) along the mating direction and fitted about a front diameter (18a, 18b) of the casing (6a, 6b, 80), and includes a radially extreme surface (19a, 19b, 62) extending between the diameter (16a, 16b) of the seal fixation cylinder and the sealing diameter, **characterized in that** an axial length of the front diameter (18a, 18b) in front of the frontal shield (17a, 17b, 60) is larger than the axial course of said frontal shield (17a, 17b, 60) inside the complementary casing (51, 51b, 90).

2. Connector housing (2) for vehicle electrical power supply comprising according to claim 1, further comprising:
- a plurality of casings (6a, 6b) including each a mating axis (8a, 8b), said mating axis being parallel to each other, each casing being structured to mate into a complementary casing (51a, 51b) following the corresponding mating axis (8a, 8b), toward the same mating direction, the casing (6a, 6b) having a seal fixation cylinder with a diameter (16a, 16b), and
- a corresponding plurality of annular seals (11a, 11b) wherein each annular seal extends outside a corresponding casing (6a, 6b), is fixed to the seal fixation cylinder of the corresponding casing (6a, 6b), and includes a sealing diameter adapted to radially seal the complementary casing (51a, 51b),
wherein it comprises a corresponding plurality of frontal shields (17a, 17b).

3. Connector housing (2) according to claim 2, comprising a main body (4) including the plurality of casing (6a, 6b)and a moulded global seal (9) including the plurality of annular seals (11a, 11b).

4. Connector housing (2) according to claim 3, wherein the global seal (9) comprises a peripheral sealing line (13) located axially at the back of the sealing diameters of the plurality of annular seals (11a, 11b) with respect to the mating direction.

5. Connector housing (2) according to the claim 3 or 4, wherein the main body (4) comprises a peripheral back wall (14) surrounding radially the seal fixation cylinders of the plurality of casings (6a, 6b), extending axially at the back of each casing which respect to the mating direction, a cross-section of the peripheral back wall (14) forming a closed convex loop.

6. Connector housing (2) according to claim 5, wherein the number of casings (6a, 6b) is equal to two and wherein the peripheral back wall (14) has a global oval shape and is radially tangent and axially adjacent to the seal fixation cylinders.

7. Connector housing (2) according to any of the preceding claims, wherein each frontal shield (17a, 17b, 260) of the housing comprises a ring surrounding the corresponding casing (6a, 6b, 80) wherein the ring of the frontal shield (17a, 17b) is press fitted onto an outside diameter (18a, 18b) of a front portion of the corresponding casing (6a, 6b).

8. Connector housing (2) according to claim 7, wherein the outside diameter (18a, 18b) of the front portion of the casing (6a, 6b) is smaller or equal to the diameter (16a, 16b) of the seal fixation cylinder of the corresponding annular seal (11a, 11b).

9. Connector housing according to any of claims 8 to 12, wherein the annular seal (70) comprises an anchoring portion (71) at the front of the annular seal and wherein the frontal shield (60) comprises a back protrusion (61) extending at the same axial position as the anchoring portion (71) and radially surrounding said anchoring portion (71).

10. Connector housing according to any of claims 1 to 9, wherein the frontal shield (60) comprises a series of slots (68), each of the slots extending axially up to a front extremity (63) of the frontal shield (60) and extending radially at least between a frontal portion (81) of the casing (80) and the radially extreme surface (62).

11. Connector housing according to claim 10, wherein the radially extreme surface (62) is substantially parallel to the mating axis (83) and extends axially along a series of pre-alignment elements (64) located between said slots (68).

12. Electrical connector (1), comprising a connector housing (2) according to any of the preceding claims, and comprising a power contact fixed inside each casing (6a, 6b, 80).

13. Connector assembly, comprising a first connector housing (2) according to any of the claims 1-11, and a second connector housing comprising the complementary casing (51a, 51b, 90) corresponding to each casing (6a, 6b, 80) of the first connector housing (2); the casing (6a, 6b) of the first connector housing (2) and the complementary casing (51a, 51b, 90) of the second connector housing being radially sealed when both connector housings are mated and/or wherein the complementary casing (51a, 51b, 90) comprises a series of guiding axial ribs (53a, 53b, 91) which cooperate with a frontal portion (18a, 18b, 81) of the casing (6a, 6b, 80).

14. Connector assembly according to claim 13 having a connector housing according to claim 10, wherein each of the axial ribs (91) of the complementary casing (90) slides along one of the slots (68) of the casing (80) during the mating sequence.

15. Manufacturing method for a connector housing (2) according to claim 3, wherein the global seal (9) is assembled on the main body, then each individual frontal shield (17a, 17b) is fixed on the main body (4) in front of the corresponding annular seal (11a, 11b) of the global seal (9).

## Patentansprüche

1. Verbindergehäuse (2) für eine elektrische Fahrzeug-Energieversorgung, das aufweist:
- ein Gehäuse (6a, 6b, 80), das eine Verbindungsachse (8a, 8b, 83) umfasst und strukturiert ist, um in ein komplementäres Gehäuse (51a, 51b, 90) der Verbindungsachse folgend in Richtung einer Verbindungsrichtung zu passen, wobei das Gehäuse (6a, 6b, 80) einen Dichtungsbefestigungszylinder mit einem Durchmessers (16a, 16b) hat, und
- eine ringförmige Dichtung (11a, 11b, 70), die sich radial außerhalb des Gehäuses (6a, 6b, 80) in Bezug auf die Verbindungsachse (8a, 8b) erstreckt und an dem Dichtungsbefestigungszylinder befestigt ist, wobei die ringförmige Dichtung (11a, 11b, 70) einen Dichtungsdurchmesser umfasst, der ausgebildet ist, das komplementäre Gehäuse (51a, 51b, 90) radial abzudichten;
aufweisend ein Frontschild (17a, 17b, 60), das sich axial vor der ringförmigen Dichtung (11a, 11b, 70) entlang der Verbindungsrichtung erstreckt und um einen vorderen Durchmesser (18a, 18b) des Gehäuses (6a, 6b, 80) angepasst ist, und eine radial äußerste Oberfläche (19a, 19b, 62) umfasst, die sich zwischen dem Durchmesser (16a, 16b) des Dichtungsbefestigungszylinders und dem Dichtungsdurchmesser erstreckt, **dadurch gekennzeichnet, dass** eine axiale Länge des vorderen Durchmessers (18a, 18b) vor dem Frontschild (17a, 17b, 60) größer ist als der axiale Verlauf des Frontschilds (17a, 17b, 60) innerhalb des komplementären Gehäuses (51a, 51b, 90).

2. Verbindergehäuse (2) für eine elektrische Fahrzeug-Energieversorgung gemäß Anspruch 1, das weiter aufweist:
- eine Vielzahl von Gehäusen (6a, 6b), die jeweils eine Verbindungsachse (8a, 8b) aufweisen, wobei die Verbindungsachsen parallel zueinander sind, wobei jedes Gehäuse strukturiert ist, um in ein komplementäres Gehäuse (51a, 51b) der entsprechenden Verbindungsachse (8a, 8b) folgend in Richtung derselben Verbindungsrichtung zu passen, wobei das Gehäuse (6a, 6b) einen Dichtungsbefestigungszylinder mit einem Durchmessers (16a, 16b) hat, und
- eine entsprechende Vielzahl von ringförmigen Dichtung (11a, 11b), wobei sich jede ringförmige Dichtung außerhalb eines entsprechenden Gehäuses (6a, 6b) erstreckt, an dem Dichtungsbefestigungszylinder des entsprechenden Gehäuses (6a, 6b) befestigt ist, und einen Dichtungsdurchmesser umfasst, der ausgebildet ist, das komplementäre Gehäuse (51a, 51b) radial abzudichten,
aufweisend eine entsprechende Vielzahl von Frontschildern (17a, 17b).

3. Verbindergehäuse (2) gemäß Anspruch 2, das einen Hauptkörper (4) mit der Vielzahl von Gehäusen (6a, 6b) und eine geformte globale Dichtung (9) mit der Vielzahl von ringförmigen Dichtungen (11a, 11b) aufweist.

4. Verbindergehäuse (2) gemäß Anspruch 3, wobei die globale Dichtung (9) eine periphere Dichtungslinie (13) aufweist, die sich axial an der Rückseite der Dichtungsdurchmesser der Vielzahl von ringförmigen Dichtungen (11a, 11b) in Bezug auf die Verbindungsrichtung befindet.

5. Verbindergehäuse (2) gemäß Anspruch 3 oder 4, wobei der Hauptkörper (4) eine periphere Rückwand (14) aufweist, die die Dichtungsbefestigungszylinder der Vielzahl von Gehäusen (6a, 6b) radial umgibt, sich axial an der Rückseite jedes Gehäuses in Bezug auf die Verbindungsrichtung erstreckt, wobei ein Querschnitt der peripheren Rückwand (14) eine geschlossene konvexe Schleife bildet.

6. Verbindergehäuse (2) gemäß Anspruch 5, wobei die Anzahl von Gehäusen (6a, 6b) gleich zwei ist und wobei die periphere Rückwand (14) eine globale ovale Form hat und radial tangential und axial angrenzend an die Dichtungsbefestigungszylinder ist.

7. Verbindergehäuse (2) gemäß einem der vorhergehenden Ansprüche, wobei jedes Frontschild (17a, 17b, 260) des Gehäuses einen Ring aufweist, der das entsprechende Gehäuse (6a, 6b, 80) umgibt, wobei der Ring des Frontschilds (17a, 17b) auf einen Außendurchmesser (18a, 18b) eines vorderen Teils des entsprechenden Gehäuses (6a, 6b) aufgedrückt ist.

8. Verbindergehäuse (2) gemäß Anspruch 7, wobei der Außendurchmesser (18a, 18b) des vorderen Teils des Gehäuses (6a, 6b) kleiner oder gleich dem Durchmesser (16a, 16b) des Dichtungsbefestigungszylinders der entsprechenden ringförmigen Dichtung (11a, 11b) ist.

9. Verbindergehäuse gemäß einem der Ansprüche 8 bis 12, wobei die ringförmige Dichtung (70) einen Verankerungsteil (71) an der Vorderseite der ringförmigen Dichtung aufweist und wobei das Frontschild (60) einen Rückvorsprung (61) aufweist, der sich an derselben axialen Position wie der Verankerungsteil (71) erstreckt und den Verankerungsteil (71) radial umgibt.

10. Verbindergehäuse gemäß einem der Ansprüche 1 bis 9, wobei das Frontschild (60) eine Serie von Schlitzen (68) aufweist, wobei sich jeder der Schlitze axial bis zu einem vorderen Ende (63) des Frontschilds (60) erstreckt und sich radial zumindest zwischen einem vorderen Teil (81) des Gehäuses (80) und der radial äußersten Oberfläche (62) erstreckt.

11. Verbindergehäuse gemäß Anspruch 10, wobei die radial äußerste Oberfläche (62) im Wesentlichen parallel zu der Verbindungsachse (83) ist und sich axial entlang einer Serie von Vorausrichtungselementen (64) erstreckt, die sich zwischen den Schlitzen (68) befinden.

12. Elektrischer Verbinder (1), der ein Verbindergehäuse (2) gemäß einem der vorhergehenden Ansprüche aufweist und einen Leistungskontakt aufweist, der innerhalb jedes Gehäuses (6a, 6b, 80) befestigt ist.

13. Verbinderanordnung, die ein erstes Verbindergehäuse (2) gemäß einem der Ansprüche 1-11 und ein zweites Verbindergehäuse aufweist, das das komplementäre Gehäuse (51a, 51b, 90) entsprechend jedes Gehäuses (6a, 6b, 80) des ersten Verbindergehäuses (2) aufweist; wobei das Gehäuse (6a, 6b) des ersten Verbindergehäuses (2) und das komplementäre Gehäuse (51a, 51b, 90) des zweiten Verbindergehäuses radial abgedichtet sind, wenn beide Verbindergehäuse verbunden sind, und/oder wobei das komplementäre Gehäuse (51a, 51b, 90) eine Serie von axialen Führungsrippen (53a, 53b, 91) aufweist, die mit einem vorderen Teil (18a, 18b, 81) des Gehäuses (6a, 6b, 80) zusammenwirken.

14. Verbinderanordnung gemäß Anspruch 13 mit einem Verbindergehäuse gemäß Anspruch 10, wobei jede der axialen Rippen (91) des komplementären Gehäuses (90) entlang eines der Schlitze (68) des Gehäuses (80) während der Verbindungssequenz gleitet.

15. Verfahren zur Herstellung eines Verbindergehäuses (2) gemäß Anspruch 3, wobei die globale Dichtung (9) auf dem Hauptkörper zusammengesetzt wird, dann jedes einzelne Frontschild (17a, 17b) auf dem Hauptkörper vor der entsprechenden ringförmigen Dichtung (11a, 11b) der globalen Dichtung (9) befestigt wird.

## Revendications

1. Boîtier de connecteur (2) pour une alimentation de puissance électrique d'un véhicule, comprenant :
- un casier (6a, 6b, 80) incluant un axe d'accouplement (8a, 8b, 83) et étant structuré pour s'accoupler dans un casier complémentaire (51a, 51b, 90) en suivant l'axe d'accouplement vers une direction d'accouplement, le casier (6a, 6b, 80) ayant un cylindre de fixation de joint avec un diamètre (16a, 16b), et
- un joint annulaire (11a, 11b, 70) s'étendant radialement à l'extérieur du casier (6a, 6b, 80) par rapport à l'axe d'accouplement (8a, 8b) et étant fixé sur ledit cylindre de fixation de joint, le joint annulaire (11a, 11b, 70) incluant un diamètre d'étanchéité adapté à effectuer une étanchéité radiale du casier complémentaire (51a, 51b, 90) ;
dans lequel il comprend un écran frontal (17a, 17b, 60) qui s'étend axialement en face du joint annulaire (11a, 11b, 70) le long de la direction d'accouplement et monté autour d'un diamètre frontal (18a, 18b) du casier (6a, 6b, 80) et inclut une surface radialement extrême (19a, 19b, 62) s'étendant entre le diamètre (16a, 16b) du cylindre de fixation de joint et le diamètre d'étanchéité, **caractérisé en ce qu'**une longueur axiale du diamètre frontal (18a, 18b) en face de l'écran frontal (17a, 17b, 60) est plus longue que la course axiale dudit écran frontal (17a, 17b, 60) à l'intérieur du casier complémentaire (51, 51b, 90).

2. Boîtier de connecteur (2) pour une alimentation de puissance électrique d'un véhicule selon la revendication 1, comprenant en outre :
- une pluralité de casiers (6a, 6b) incluant chacun un axe d'accouplement (8a, 8b), lesdits axes d'accouplement étant parallèles les uns aux autres, chaque casier étant structuré pour s'accoupler dans un casier complémentaire (51a, 51b) en suivant l'axe d'accouplement correspondant (8a, 8b) vers la même direction d'accouplement, le casier (6a, 6b) ayant un cylindre de fixation de joint avec un diamètre 16a, 16b), et
- une pluralité correspondante de joints annulaires (11a, 11b), dans lesquels chaque joint annulaire s'étend à l'extérieur d'un casier correspondant (6a, 6b), est fixé au cylindre de fixation de joint du casier correspondant (6a, 6b), et inclut un diamètre d'étanchéité adapté à effectuer une étanchéité radiale du casier complémentaire (51a, 51b), dans lequel il comprend une pluralité correspondante d'écrans frontaux (17a, 17b).

3. Boîtier de connecteur (2) selon la revendication 2, comprenant un corps principal (4) incluant la pluralité de casiers (6a, 6b) et un joint global moulé (9) incluant la pluralité de joints annulaires (11a, 11b).

4. Boîtier de connecteur (2) selon la revendication 3, dans lequel le joint global (9) comprend une ligne d'étanchéité périphérique (13) située axialement au niveau du dos des diamètres d'étanchéité de la pluralité de joints annulaires (11a, 11b) par rapport à la direction d'accouplement.

5. Boîtier de connecteur (2) selon les revendications 3 ou 4, dans lequel le corps principal (4) comprend une paroi dorsale périphérique (14) qui entoure radialement les cylindres de fixation de joint de la pluralité de casiers (6a, 6b), en s'étendant axialement au dos de chaque casier par rapport à la direction d'accouplement, une section transversale de la paroi dorsale périphérique (14) formant une boucle convexe fermée.

6. Boîtier de connecteur (2) selon la revendication 5, dans lequel le nombre de casiers (6a, 6b) est égal à deux, et dans lequel la paroi dorsale périphérique (14) a une forme globale ovale et est radialement tangente et axialement adjacente au cylindre de fixation de joint.

7. Boîtier de connecteur (2) selon l'une quelconque des revendications précédentes, dans lequel chaque écran frontal (17a, 17b), 260) du boîtier comprend une bague entourant le casier correspondant (6a, 6b, 80), dans lesquelles la bague de l'écran frontal (17a, 17b) est engagée à la presse sur un diamètre extérieur (18a-18b) d'une portion frontale du casier correspondant (6a, 6b).

8. Boîtier de connecteur (2) selon la revendication 7, dans lequel le diamètre extérieur (18a, 18b) de la portion frontale du casier (6a, 6b) est inférieur ou égal au diamètre (16a, 16b) du cylindre de fixation de joint du joint annulaire correspondant (11a, 11b).

9. Boîtier de connecteur selon l'une quelconque des revendications 8 à 12, dans lequel le joint annulaire (70) comprend une portion d'ancrage (71) à l'avant du joint annulaire, et dans lequel l'écran frontal (60) comprend une projection dorsale (61) s'étendant à la même position axiale que la portion d'ancrage (71), et entourant radialement ladite portion d'ancrage (71).

10. Boîtier de connecteur selon l'une quelconque des revendications 1 à 9, dans lequel l'écran frontal (60) comprend une série de fentes (68), chacune des fentes s'étendant axialement jusqu'à une extrémité frontale (63) de l'écran frontal (60) et s'étendant radialement au moins entre une portion frontale (81) du casier (80) et la surface radialement extrême (62).

11. Boîtier de connecteur selon la revendication 10, dans lequel la surface radialement extrême (62) est sensiblement parallèle à l'axe d'accouplement (83) et s'étend axialement le long d'une série d'éléments de préalignement (64) situés entre lesdites fentes (68).

12. Connecteur électrique (1), comprenant un boîtier de connecteur (2) selon l'une quelconque des revendications précédentes, et comprenant un contact de puissance fixé à l'intérieur de chaque casier (6a, 6b, 80).

13. Assemblage formant connecteur, comprenant un premier boîtier de connecteur (2) selon l'une quelconque des revendications 1 à 11, et un second boîtier de connecteur comprenant le casier complémentaire (51a, 51b, 90) correspondant à chaque casier (6a, 6b, 80) du premier boîtier de connecteur (2) ; le casier (6a, 6b) du premier boîtier de connecteur (2) et le casier complémentaire (51a, 51b, 90) du second boîtier de connecteur étant radialement étanchés lorsque les deux boîtiers de connecteur sont accouplés et/ou dans lequel le casier complémentaire (51a, 51b, 90) comprend une série de nervures axiales de guidage (53a, 53b, 91) qui coopèrent avec une portion frontale (18a, 18b, 81) du casier (6a, 6b, 80).

14. Assemblage formant connecteur selon la revendication 13, ayant un boîtier de connecteur selon la revendication 10, dans lequel chacune des nervures axiales (91) du casier complémentaire (90) coulisse le long de l'une des fentes (68) du casier (80) pendant la séquence d'accouplement.

15. Procédé de fabrication pour un boîtier de connecteur (2) selon la revendication 3, dans lequel le joint global (9) est assemblé sur le corps principal, ensuite chaque écran frontal individuel (17a, 17b) est fixé sur le corps principal (4) en face du joint annulaire correspondant (11a, 11b) du joint global (9).
